Europäisches Patentamt

European Patent Office

Office européen des brevets

(19)

(11) Veröffentlichungsnummer: **0 017 655 B1**

(12)

# EUROPÄISCHE PATENTSCHRIFT

(45) Veröffentlichungstag der Patentschrift:
05.08.81

(21) Anmeldenummer: 79101199.2

(22) Anmeldetag: 20.04.79

(51) Int. Cl.³: **C 04 B 37/02**

(54) **Hermetisch dichte Keramik-Metall-Verbindung.**

(43) Veröffentlichungstag der Anmeldung:
**29.10.80 Patentblatt 80/22**

(45) Bekanntmachung des Hinweises auf die Patenterteilung:
**05.08.81 Patentblatt 81/31**

(84) Benannte Vertragsstaaten:
**CH DE FR GB IT NL SE**

(56) Entgegenhaltungen:
DE-B-1 264 547
FR-A-1 426 197
US-A-3 114 612
US-A-3 125 698

(73) Patentinhaber: **Rosenthal Technik AG, Postfach 1508, D-8672 Selb/Bayern (DE)**

(72) Erfinder: **Pickel Helmut, Siegfriedstrasse 39, D-8560 Lauf/Pegnitz (DE)**

## Hermetisch dichte Keramik-Metall-Verbindung

Die Erfindung betrifft eine hermetisch dichte Keramik-Metall-Verbindung mit hoher Festigkeit, wobei insbesondere ringförmige Teile aus Metall und Keramik, vorzugsweise Aluminiumoxid, durch Stumpflötung verbunden sind, in dem die betreffenden Keramikflächen in üblicher Weise metallisiert sind und durch ein eingefügtes Lot, insbesondere Hartlot, mit dem betreffenden Metallteil durch Erhitzen in einer Schutzgasatmosphäre oder in Vakuum zusammengefügt sind. Eine solche Keramik-Metall-Verbindungs-Technik erweist sich als günstig für Gehäuse von Hochleistungssenderöhren, Vakuum-Leistungsschalter und Vakuumkondensatoren, an deren Betriebssicherheit hohe Anforderungen gestellt werden. Für elektronische Bauelemente dieser Art wird eine hermetische und eine hohe Festigkeit aufweisende Verbindung zwischen Keramik und Metall bzw. einem weiteren metallisierten Keramikteil verlangt. Ausserdem treten während des Betriebes solcher elektronischen Bauelemente erhöhte Temperaturen auf, die zu hohen mechanischen Spannungen zwischen der Keramik und dem Metall führen.

Bedingt durch die Tatsache, dass die verwendeten Metalle einen stark unterschiedlichen Ausdehnungskoeffizienten zur Keramik aufweisen, ergeben sich z.B. beim Einlöten oder auch bei hohen Anwendungstemperaturen Lötstellenbrüche. Dieses Problem wurde bislang dadurch gelöst, dass Materialien mit möglichst gleichen bzw. angepassten Ausdehnungskoeffizienten für den zu verlötenden Metallpartner und der damit in Verbindung stehenden Keramik-Metall-Teile gewählt wurde sowie durch geeignete konstruktive Massnahmen bei der Lötspalte, welche naturgemäss nur einen möglichst kleinen Durchmesser aufweisen darf. Obwohl diese beiden Verbindungstechniken für viele Anwendungszwecke befriedigend ist, besteht doch Veranlassung nach weiteren Verbindungsmöglichkeiten von Metallen und Nichtmetallen zu suchen, da man bestrebt ist, die Verbindung hinsichtlich Leckagen zu verbessern und die thermische Belastbarkeit zu erhöhen.

Um diese Spannungen abzubauen, benutzt man die Technik der Stumpf- bzw. Flachlötung wie sie beispielsweise in der DE-PS 10 45 305 und in der DE-OS 20 24 625 näher beschrieben ist. Dabei wird zwischen der Metall- und der Keramikoberfläche eine metallische, vorzugsweise folienartige Zwischenschicht eingelötet, deren Ausdehnungseigenschaften zwischen der Keramik und dem Metallteil liegen. Durch die radiale Verformbarkeit der dünnen Zwischenschicht werden die auftretenden Spannungen abgebaut. Ausserdem erfolgt eine Anpassung der Ausdehnungskoeffizienten durch dieses Mittelstück. Bei derartigen Verbindungen treten aber häufig Brüche in der Keramik auf, die auf Wärmespannungen zurückzuführen sind, da insbesondere die erwähnten Ausdehnungsunterschiede vom Metall über die Lötstelle auf die Keramik übertragen werden. So besteht bei höheren Anwendungstemperaturen die Gefahr vom Leckwerden von Keramik-Metall-Gehäusen, womit erhebliche Betriebsstörungen eintreten können. Es wird deshalb nach Lösungsmöglichkeiten gesucht, die Sicherheit solcher elektronischen Bauelemente weiter zu erhöhen.

Eine andere Möglichkeit durch geeignete konstruktive Massnahmen an der Verbindungsstelle zwischen Keramik und Metall das Problem der unterschiedlichen Ausdehnungskoeffizienten der verwendeten Werkstoffe zu umgehen, wird in der DE-OS 23 26 373 vorgeschlagen. Die Spannungen beim Einlöten von Teilen aus Metall in Vertiefungen von Keramikkörpern sollen dabei weitgehend vermieden werden, indem die Keramik nur streifenförmig metallisiert wird. Solche beschriebenen technischen Massnahmen sind aber nur begrenzt anwendbar, so z.B. vom Einlöten von Keramikröhrchen in einen metallischen Block. Die Praxis zeigt auch, dass die Lötfuge nicht beliebig erweitert werden kann, weil sonst ein dichtes Verschliessen nicht mehr gewährleistet ist.

Die Aufgabe der Erfindung in Anbetracht dieses Standes der Technik ist es, dieses Spannungsgefälle zwischen Keramik und Metall weiter zu verbessern und die obengenannten Nachteile zu beseitigen. Die Erfindung sieht auch eine hermetische Abdichtung gegenüber einer Gasatmosphäre vor. Ferner soll die Festigkeit des Verbundes zwischen Keramik und Metall erhöht werden, wobei man aber nicht mehr an eine genaue Anpassung der Ausdehnungskoeffizienten der verwendeten Werkstoffe angewiesen ist.

Die vorgenannte Aufgabe wird dadurch gelöst, dass hintereinanderliegende Mehrfachlötungen an den Stegen von einseitig offenen, profilartigen Metallhohlkörpern an der Verbindungsstelle zum metallisierten Keramikteil vorgenommen sind.

Eine zweckmässige Weiterbildung des erfinderischen Gedankens besteht auch darin, dass der Metallhohlkörper einen U-förmigen oder kammartigen Querschnitt aufweist.

Eine vorteilhafte Ausgestaltung der Erfindung besteht auch darin, dass die Wandstärke der Stege zur Höhe des Hohlkörpers in einem Verhältnis von 1:5 steht. Auch der Abstand der Stege ist so zu wählen, dass er das 3- bis 4-fache der Stegdicke beträgt.

Ausführungsbeispiele der Erfindung werden im folgenden anhand von schematischen Zeichnungen mit weiteren Einzelheiten beschrieben. Es zeigt

Fig. 1: einen Querschnitt durch ein vakuumdichtes Gefäss, z.B. einen Vakuumleistungsschalter;

Fig. 2: einen Querschnitt durch einen Hochfrequenz-Stützer;

Fig. 3: den Querschnitt einer Hochleistungssenderöhre.

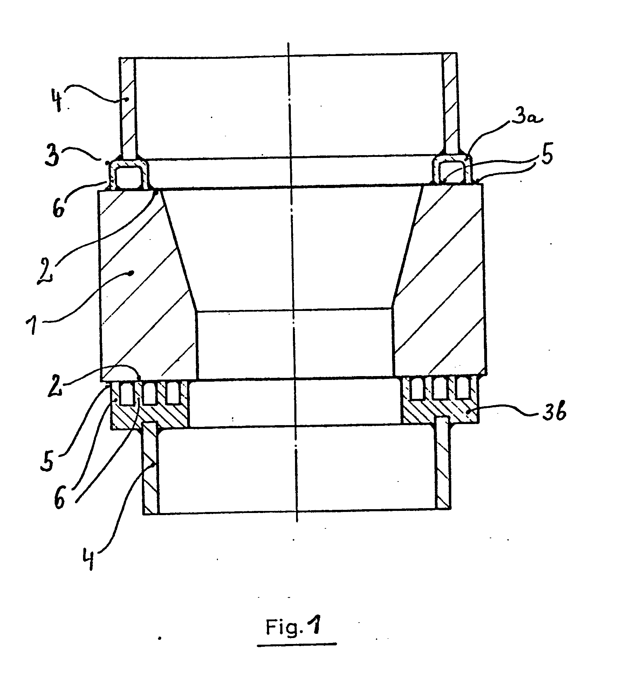

Die Erfindung ermöglicht eine verbesserte Keramik-Metallötverbindung, insbesondere bei der Herstellung von elektronischen Gehäusen. Sie ist jedoch auch in Verbindung mit der Herstellung von verschiedenen anderen Verbundgegenständen mit Keramik-Metallstruktur von Nutzen. Es ist davon auszugehen, dass Metall und Keramiken unterschiedliche Ausdehnungskoeffizienten besitzen, die zu hohen Spannungen in einem Verbundgegenstand der in Fig. 1 bis 3 gezeigten Art führen, insbesondere wenn der Gegenstand erhitzt wird. Um die sich einstellenden mechanischen Spannungen abzubauen, benutzt man als konstruktive Massnahme die Stumpf- bzw. die Einfachstirnlötung. Bei dieser bekannten Massnahme werden überwiegend zylindrisch ausgebildete Metallteile, deren Wandstärke besonders dünn gehalten wird, z.B. zwischen 0,3 bis 1 mm senkrecht auf die metallisierten Keramikflächen aufgesetzt und über einen relativ kleinen Querschnitt vakuumdicht verlötet. Durch die relativ dünnen Zylinderteile des Metalls werden die auftretenden Wärmespannungen abgebaut. Diese Technik kann man hinsichtlich der mechanischen Festigkeit und der Betriebssicherheit von vakuumdichten Keramik-Metall-Verbindungen verbessern, indem man die erfindungsgemässe Mehrfachschneiden-Lötung vornimmt. Durch diese technische Massnahme erhöht sich auch an jeder Verbindungsstelle die thermische Belastbarkeit, auch wird beim Undichtwerden einer Lötstelle die Vakuumdichtigkeit des Gefässes nicht beeinträchtigt. Besonders das Hartlöten unter Schutzgas über 800 °C ist von dieser Verbindungstechnik her besser und ermöglicht auch den Einsatz weniger qualifizierter Arbeitskräfte.

Mit Keramikmaterial ist in der vorliegenden Beschreibung die gesamte Vielart derjenigen Werkstoffe angesprochen, die als Isoliermaterialien in der Elektronik verwendet werden. Insbesondere sind es solche Werkstoffe, die in der Vakuumtechnik verwendet werden, wie z.B. Aluminiumoxid in verschiedenen Reinheitsgraden, Berylliumoxid, Zirkonoxid, Saphir und Forsterit.

Die Auswahl der Metalle hängt im allgemeinen von der beabsichtigten Verwendung des Gegenstandes ab. Es kann sich um reines Metall, wie z.B. Molybdän, Niob, Wolfram, Kupfer oder um Metalllegierungen aus einem oder mehreren Metallen handeln, wie zum Beispiel Eisen-Nickel-Legierungen und Eisen-Nickel-Kobalt-Verbindungen und Nickel-Chrom-Legierungen. Die Auswahl der Metalle bzw. Metallegierungen hängt aber nicht davon ab, dass der Ausdehnungskoeffizient der Metalle möglichst ähnlich dem keramischen Material sein soll. Im Rahmen der Erfindung sind ausser Kupfer/Silber/Gold und deren Legierungen auch andere Lote nutzbar, wie beispielsweise niedrig schmelzende Hartlote für Hochfrequenzstützer. Brauchbare Lote in dieser Hinsicht sind auch Paladiumnickel oder Lötpasten.

Bei der Herstellung vakuumdichter Metall-Keramik-Lötverbindung wird üblicherweise die zu verlötende Oberfläche der Keramik 1 mit einer geeigneten, vorzugsweise eingebrannten Metallisierungsschicht 2 versehen, auf welche der Metallhohlkörper 3 mittels Weich- oder Hartlot 5 aufgelötet wird. Hartlote werden beispielsweise überall dort zur Anwendung kommen, wo man von der Verbindung eine hohe mechanische Festigkeit und thermische Belastbarkeit fordern wird. Die Metallisierung der Keramik 1 erfolgt üblicherweise nach dem Molybdän-Mangan-Verfahren, indem eine aufgetragene Metallpaste in kontrollierter Schutzgasatmosphäre oder Vakuum auf die Keramik eingebrannt wird. Auch kann es nützlich sein, das auf diese Weise metallisierte Keramikteil 2 zu vernickeln, damit später dieses Teil vom Lot gut benetzt wird.

Zur weiteren Erläuterung der vorliegenden Erfindung sind einige Ausführungsbeispiele angeführt.

Beispiel 1:

Das dargestellte Ausführungsbeispiel gemäss Fig. 1 zeigt ein vakuumdichtes Gefäss, wie es zum Beispiel für Vakuumschalter und Vakuumkondensatoren benötigt wird. Neben einer hohen Festigkeit der Keramik-Metallverbindung wird noch eine Vakuumdichte auch nach Temperaturzyklen bis zu 700 °C gefordert. Die Keramik 1 besteht aus Aluminiumoxid und ist in bekannter Weise an den Stirnseiten mit einer hartlötbaren Metallisierungsschicht 2 versehen, auf der die Metallkohlkörper 3 mit den Stegen 6 beidseitig mehrfach aufgelötet ist. Dabei ist alternativ ein U-förmiger Querschnitt 3a und ein kammartiges Profil 3b dargestellt. Die Anlötung eines weiteren ringförmigen metallischen Teils 4 erfolgt nach der bekannten Einfachschneiden-Lötung.

Beispiel 2

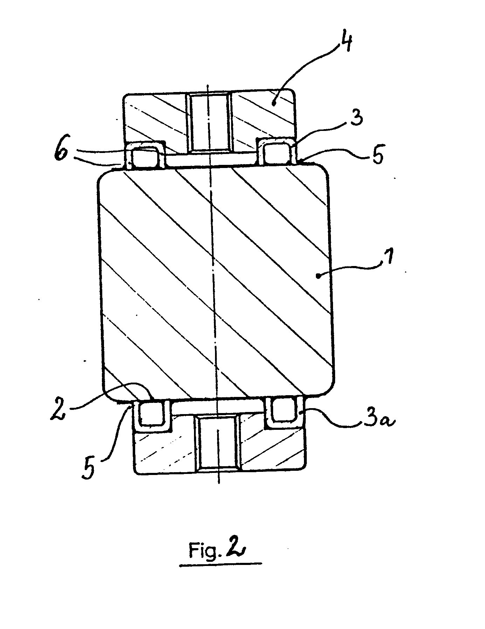

In Fig. 2 ist ein Hochfrequenz-Stützer dargestellt, wie er z.B. in kapazitiv erwärmten Furnierpressen als Isolator eingesetzt werden kann. Die Keramik 1 besteht aus glasiertem Aluminiumoxid und trägt an beiden Stirnseiten eine hartlötbare Metallisierungsschicht 2. Der Metallhohlkörper 3 mit den koaxialen Stegen 6 wird beim Lötprozess mit der Keramik 1 und dem Metallteil 4 in Form einer Gewindebuchse durch das Lot 5 verbunden. Die Lötung erfolgt bei 780 °C mit einer Legierung aus 72 Ag/28 Cu oder anderen Silber-Kupfer-Loten bei Arbeitstemperaturen ab 600 °C. Der Metallhohlkörper 3 weist in diesem Fall ein U-förmiges Profil mit einer Stegdicke von 0,5 mm auf, wobei das Verhältnis von Wandstärke zur Höhe 1:5 beträgt. Der Abstand der Stege bei dieser Zweifachschneiden-Lötung beträgt das 3- bis 4-fache der Stegdicke, wodurch eine für den Spannungsabbau günstige Ausbildung der Lötkehle erhalten wird. Durch die erfindungsgemässe Doppelschneiden-Lötung konnte an diesem Stützisolator die Zugbelastung von 800 daN auf 1250 daN nach Glühbehandlung bei 500 °C unter Schutzgas erhöht werden. Bei dieser Ausführung löst sich erst bei 1250 daN die Verbindung an der inneren Schneide und trotz Verformung des U-förmigen Metallhohlkörpers 3 blieb die äussere Verbindungsstelle noch vakuumdicht. Auch eine anschliessende Temperaturwechselprüfung zwischen 120 °C und Raumtemperatur erbrachte keine Verschlechterung der Werte; auch blieben diesmal die Lötstellen vakuumdicht.

Beispiel 3

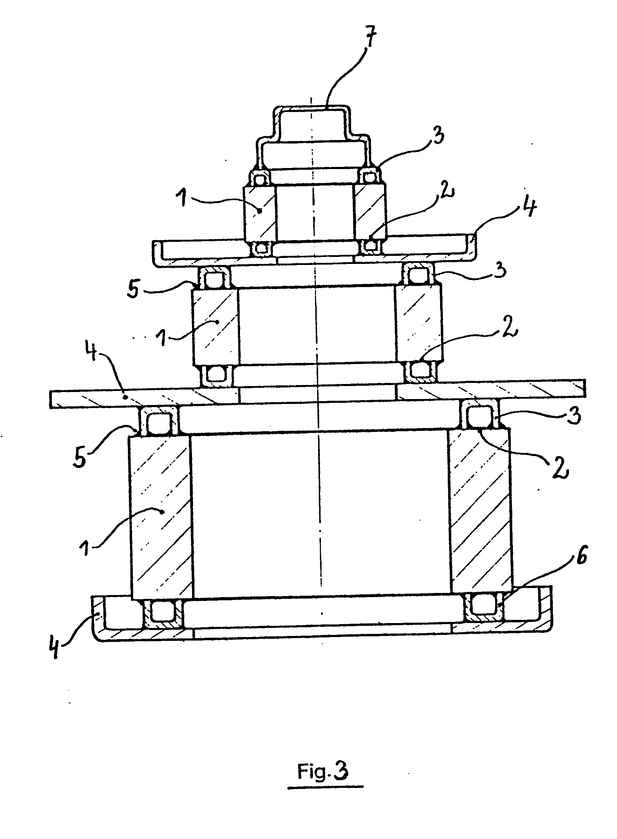

Eine Hochleistungssenderöhre ist in Fig. 3 abgebildet. Der Aufbau besteht aus drei rohrförmigen Keramikteilen 1, und zwar aus Aluminiumoxidkeramik, deren Stirnseiten wiederum mit einer hartlötbaren Metallisierungsschicht 2 versehen sind. Auf diese Metallisierungsschichten 2 sind jeweils ein ringförmiger 1 mm hoher Metallhohlkörper 3 mit U-förmigem Profil 3a aufgelötet. Die Stegdicke beträgt 0,3 mm. Auf diese Metallhohlkörper 3 sind wiederum Metallteile 4 mit einer Dicke zwischen 0,5 und 2 mm aufgelötet. In Montagehilfe können diese Metallhohlkörper 3 und die Metallteile 4 bzw. 7 durch Punktschweissen und einem Dazwischenlegen einer Lötfolie vorher geheftet werden.

Bei der praktischen Ausführung für die Herstellung haftfester und vakuumdichter Keramik-Metall-Lötverbindungen durch Doppel- oder Mehrfachschneidenlötung wird gezeigt, dass man Verbindungen mit hoher Festigkeit und Vakuumdichtigkeit trotz wesentlicher Abweichungen in den Ausdehnungskoeffizienten von Keramik und Metall erhält. Durch die Merhfachschneiden-Lötung ist eine erhebliche Verbesserung für das Anbringen von Metallteilen an metallisierte Keramikflächen erreicht worden.

**Patentansprüche**

1. Hermetisch dichte Keramik-Metall-Verbindung mit hoher Festigkeit, wobei die Teile aus Metall bzw. Metallegierungen und Keramik, vorzugsweise Aluminiumoxid, nach Art von Stumpflötungen verbunden sind, dadurch gekennzeichnet, dass hintereinanderliegende Mehrfachlötungen (5) an den Stegen (6) von einseitig offenen, profilartigen Metallhohlkörpern (3) an der Verbindungsstelle zum metallisierten Keramikteil (2) vorgenommen sind.

2. Hermetisch dichte Keramik-Metall-Verbindung nach Anspruch 1, dadurch gekennzeichnet, dass der Metallhohlkörper eine U-förmige Gestalt (3a) besitzt.

3. Hermetisch dichte Keramik-Metall-Verbindung nach Anspruch 1, dadurch gekennzeichnet, dass der Metallhohlkörper einen kammartigen Querschnitt (3b) aufweist.

4. Hermetisch dichte Keramik-Metall-Verbindung nach Anspruch 1–3, dadurch gekennzeichnet, dass die Wandstärke der Stege (6) zur Höhe des Metallhohlkörpers (3) im Verhältnis von 1:5 steht.

5. Hermetisch dichte Keramik-Metall-Verbindung nach Anspruch 1–3, dadurch gekennzeichnet, dass die Abstände der Stege (6) das 3- bis 4-fache der Stegdicke betragen.

**Claims**

1. Hermetically tight ceramic-metal connection with high strength, in which the components of metal or metal alloys and ceramic, preferably aluminium oxide, are connected together in the manner of butt soldering, characterised in that multiple solderings (5) in series are undertaken of the flanges (6) of hollow sectional metal bodies (3) open at one side, at the place of connection to the metallised ceramic component (2).

2. Hermetically tight ceramic-metal connection according to claim 1, characterised in that the hollow metal body has a U-shaped configuration (3a).

3. Hermetically tight ceramic-metal connection according to claim 1, characterised in that the hollow metal body has a comb-shaped cross section (3b).

4. Hermetically tight ceramic-metal connection according to claim 1–3, characterised in that the wall thickness of the flanges (6) is in a ratio of 1:5 to the height of the hollow metal body (3).

5. Hermetically tight ceramic-metal connection according to claim 1–3, characterised in that the spacings of the flanges (6) amount to 3 to 4 times the flange thickness.

**Revendications**

1. Assemblage céramique-métal hermétiquement étanche à haute résistance mécanique dans lequel les pièces en métal ou en alliages de métaux et en matière céramique, de préférence en alumine, sont reliées par des brasures du genre en bout, caractérisé en ce que des brasages multiples (5), situés les uns à la suite des autres, sont réalisés sur les ailes (6) de corps métalliques creux du genre profilés (3), ouverts d'un côté, au niveau de la jonction avec la pièce céramique métallisée (2).

2. Assemblage céramique-métal hermétiquement étanche suivant la revendication 1, caractérisé en ce que le corps métallique creux présente une forme en U (3a).

3. Assemblage céramique-métal hermétiquement étanche suivant la revendication 1, caractérisé en ce que le corps métallique creux présente une section en forme de peigne (3b).

4. Assemblage céramique-métal hermétiquement étanche suivant l'une quelconque des revendications 1 à 3, caractérisé en ce que le rapport de l'épaisseur de paroi des ailes (6) à la hauteur du corps métallique creux (3) est de 1:5.

5. Assemblage céramique-métal hermétiquement étanche suivant l'une quelconque des revendications 1 à 3, caractérisé en ce que les espacements des ailes (6) valent trois à quatre fois l'épaisseur des ailes.

Fig. 1

Fig. 2

Fig. 3